# EUROPEAN PATENT SPECIFICATION

(11) **EP 0 424 992 B1**
(45) Date of publication and mention of the grant of the patent: **17.05.1995**
(21) Application number: 90124470.7
(22) Date of filing: 22.12.1987
(51) Int. Cl.: B60B 35/16, B22D 27/04

(54) **Method of manufacturing a rearaxle case**
Verfahren zur Herstellung eines Hinterachsgehäuses
Fabrication de carter d'essieu arrière

(30) Priority: 24.12.1986 JP 306326/86
(43) Date of publication of application: 02.05.1991
(62) Divisional of application: 87118995.7
(73) Proprietor: Isuzu Motors Limited, Shinagawa-ku, Tokyo 140 (JP)
(72) Inventor: Kuwahara, Toru, c/o Kawasaki Factory of, Kawasaki-ku, Kawasaki-shi, Kanagawa (JP)
(74) Representative: Herrmann-Trentepohl, Werner, Dipl.-Ing.

(56) References cited:
- DE-A- 3 402 272
- AUTOMOTIVE ENGINEER vol. 8, no. 5, 15 November 1983, SOUTHEND-ON-SEA,GB page 78

## Description

### 1. Technical Field

The present invention relates to a rear axlecase, particularly to those rear axlecases which are made of nodular graphite cast iron casting, having their endtubes of the axle housing improved in the material quality.

### 2. Background Art

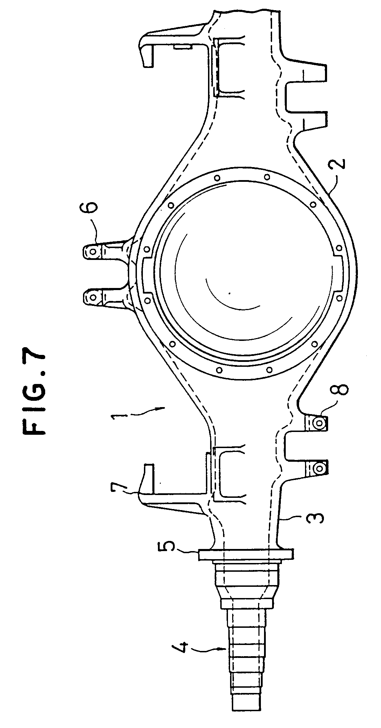

The conventional construction of an automobile rear axlecase that houses a differential gear and two axles that extend from the differential gear laterally both ways has been as follows:
As shown in Fig. 7, which presents an example of conventional design, the rear axlecase 1 is made up mainly of a differential gear housing 2 and two axle housings 3, which extend laterally both ways from the differential gear housing 2. At each outher end of the axle housings 3, there is formed an endtube 4, and at the differential gear housing 2 side thereof, there is formed a brake flange 5. In the top part of aforesaid differential gear housing 2, there is formed one or more pieces of bracket 6. At a top part of each aforesaid axle housing 3, there is formed a spring seat 7, while at a bottom part thereof, there is formed one or more pieces of torquerod bracket 8. Here, the endtubes 4 are made of a casting of good mechanical properties, while most of other parts are press formed, and these members are assembled by welding into a complete rear axlecase 1.

In this example, because a plurality of members are assembled by welding, not only the productivity is low, but the weldments are liable to become the weakness in the structural integrity. One further problem here is that, should a weldment be found deficient in strength, the only remedial measure possible would be redesigning to enlarge the fundamental dimensions, necessitating alteration of the form of the parts. Another problem is that, since press dies are expensive to make, this method is not amiable to flexible manufacturing.

In another example, attempts at overcoming these difficulties were made by resorting to a construction, in which aforesaid plurality of members were all cast into one integral body from a cast steel, or else, the differential gear housing 2 and the axle housing 3 were cast into one integral body from cast steel, and brackets 6 and the likes were attached thereto by means of bolts or welding, to be assembled into a complete rear axlecase 1.

The problems here are that, since the castability of cast steels is so poor, needing high casting temperatures and forming shrinkage cavities rather easily, that the requirements imposed on the casting mold are severe, raising the production cost, and that manufacture of thin wall articles is difficult, making weight reduction difficult.

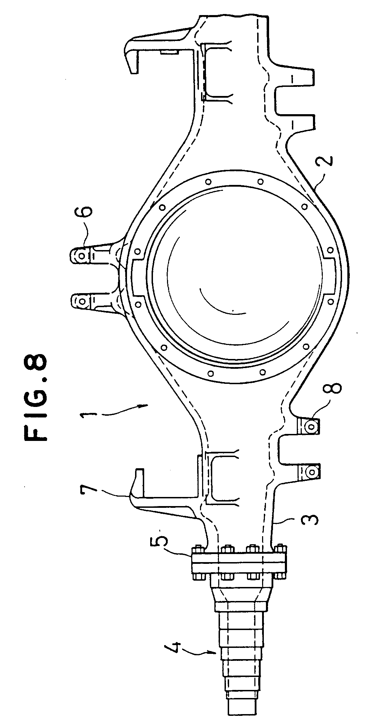

To solve these problems, yet another construction was devised. In this third conventional practice, an example of which is shown in Fig. 8, the endtubes 4 of the axle housing 3, which call for good toughness, are made from forging, which is known to have good mechanical properties, while the parts of the axle housing 3 other than the endtubes 4, whose deficiency in strength may be corrected by adjusting the form and dimensions, are cast into an integral body together with the differential gear housing 2 from nodular graphite cast iron, and these forgings and the nodular graphite cast iron casting are assembled with bolts.

The problem here is that, since welding of forgings to nodular graphite cast iron castings is difficult, if not entirely impossible, by the technology available today, and since, even if successfully welded, the strength of weldment is insufficient, aforesaid forging part and casting part have to be joined by means of bolts, necessarily raising the production cost.

From the DE-A-3 402 272 a rear axlecase construction according to the preamble of claim 1 is known in which the differential gear housings and axle housings are cast from a nodular graphite cast iron integral casting.

However, it is desired on one hand that the housing rear axlecase is low in the hardness and on the other hand that the hardness of the end tube parts is strong and tough.

One proposal is to provide an induction hardened area within the part of the spindle, for example from Automotive Engineer, volume 8, no.5 , October/November 1983, page 78, Southend-on-Sea, Great Britain.

This method is very difficult and expensive and it is not possible to overcome the problem as described above.

### SUMMARY OF THE INVENTION

This invention has been done to solve those problems mentioned above.

Namely, it is an objective of this invention to provide a rear axlecase that it is low in the hardness and is ductile as a whole so that it will not fracture, even if got deformed, when it hits an object protruding from the road surface.

Another objective of this invention is to provide a rear axlecase that the hardness of its endtube parts is so raised above those of other parts as to make them strong and tough, so that said endtubes will not be damaged by the stress working on the axle.

Yet another objective of this invention is to provide a rear axlecase that can be manufactured at a low cost by casting the differential gear housings and the axle housing into an integral body, thus dispensing with assemblage work such as welding or joining by bolts.

This object is solved by a method of manufactoring according to claim 1.

### BRIEF DESCRIPTION OF THE DRAWINGS

Figure 1 is a side view of the major part of the rear axlecase of this invention, illustrating a preferred embodiment of this invention;
Figure 2 is a set of schematic drawings, illustrating a manufacturing practice of the rear axlecase of this invention;
Figure 3 is a drawing, presenting an example set of design specifications of the rear axlecase of this invention;
Figure 4 is a drawing, showing the place of sampling the tension test piece;
Figure 5 is a drawing, showing the places onto which quenching is to be performed;
Figure 6 is a diagram, presenting the results of quenching;
Figure 7 is a side view of the major part of conventional rear axlecase, showing the first example therefor; and
Figure 8 is a side view of the major part of conventional rear axlecase, showing the third example therefor.

### DESCRIPTION OF THE PREFERRED EMBODIMENTS

The preferred embodiments of a rear axlecase of this invention will now be disclosed in detail, referring to attached drawings.

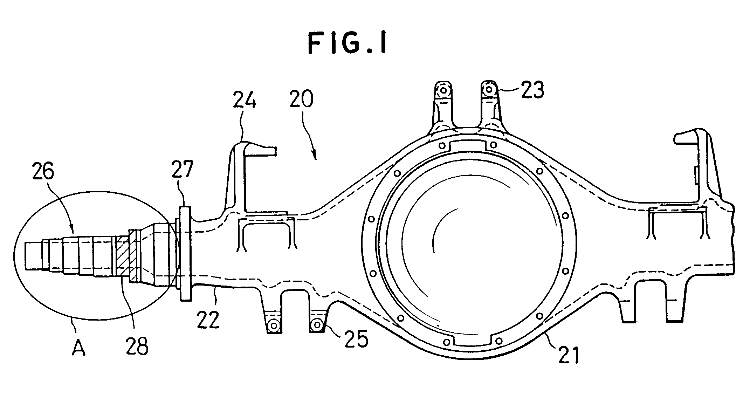

As shown in Fig. 1, the rear axlecase 20 consists mainly of a differential gear housing 21 of approximately spherical shape that houses the differential gear, and two axle housings 22 of cylindrical shape that extend laterally both ways from said differential gear housing 21, housing the two axles which extend laterally both ways from said differential gear, aforesaid two members, the differential gear housing 21 and the axle housings 22, being cast into an integral body from nodular graphite cast iron.

In the top part of the differential gear housing 21, there is provided one or more pieces of bracket 23, while in each of the axle housings 22, there is a spring seat 24 provided in its top part and one or more pieces of torquerod bracket 25 in its bottom part is. Although aforesaid bracket 23, spring seat 24, and torquerod bracket 25 are integrally cast into one body together with the differential gear housing 21 and the axle housings 22 from nodular graphite cast iron in the present embodiment, they may be separate members to be attached by bolts.

In the outher end of each aforesaid axle housings 22, there is formed an endtube 26, and at the differential gear housing 21 side thereof, there is formed a brake flange 27. In each of aforesaid endtubes 26, furthermore, there is formed a hardened structure part 28. In the present embodiment, said hardened structure 28 is formed by accelerating the cooling race of the endtube 26 as a whole (the part designated by A in Fig. 1), either by exposing said part A to atmospheric air earlier than other parts and letting it naturally air cool, or by forcibly cooling said part A.

Furthermore, the differential gear housings 21 and the parts of the axle housing 22 other than the endtubes 26 in aforesaid integral body are made into a ductile structure. This is achieved by letting the differential gear housing 21 and the parts of the axle housings 22 other than the endtubes 26 cool as kept in the casting mold.

In the present embodiment furthermore, the root part of the endtube 26 which corresponds to aforesaid hardened structure part 28 may be subjected to high frequency quenching, on one hand, and the rear axlecase 20 as a whole be subjected to annealing, on the other hand. If said quenching is to be conducted before annealing, quenching is performed at a temperature in or near 970 ∼ 980°C range, and annealing is performed at a temperature below the Aₗ transformation point (about 720°C). Such a heat treatment finishes the structure of the root part of the endtube 26 (shown in Fig. 1 by hatching lines) in the tempered martensitic structure, while leaving other parts in more ductile pearlite structure.

If aforesaid quenching is to be conducted after annealing, on the other hand, annealing is performed at a temperature near 800°C, while quenching is performed from a temperature in or near 970 ∼ 980°C range Such a heat treatment finishes the structure of the root part of the endtube 26 (shown in Fig. 1 by hatching lines) in the martensitic structure, while leaving other parts in more ductile pearlite structure.

The particulars of quenching and annealing are to be decided upon in accordance with the incidental need, such as the kind of the nodular graphite cast iron to be used and the design strengths to be attained, but the ultimate construction in the present embodiment is that, after the rear axlecase 20 has been cast as an integral body, only the root parts of the trio endtubes 26 of aforesaid axle housings 22 should be subjected to hardening treatment to form the hardened parts 28, while the whole rest of the casting should be in ductile structure.

The rear axlecases 20 of this invention, having such a construction as described above, are manufactured by following practice.

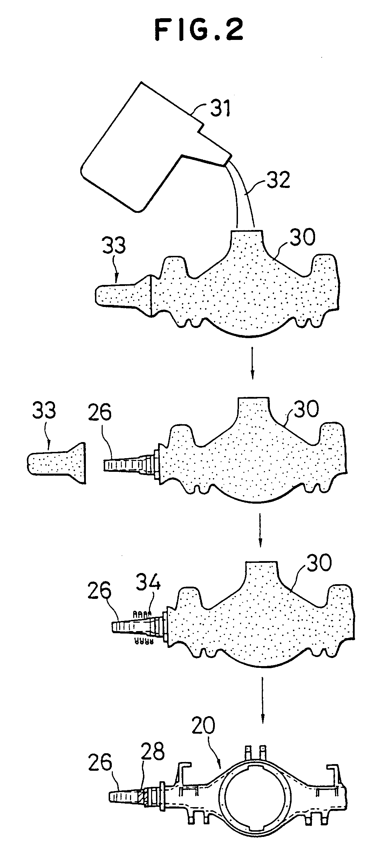

As illustrated in Fig. 2, a sand casting mold 30 is prepared so as to produce the differential gear housing 21 and the axle housings 22 in an integral casting. In the present embodiment, brackets 23 and likes are also integrated into the same mold. After completion of casting of the molten nodular graphite cast iron 32 made in a ladle 31, first that part 33 of the mold 30 which has served in the making of the whole of the endtubes 26 (the hatched part A in Fig. 1) is divided and removed, leaving the endtubes 26 to cool naturally or be cooled forcibly so as to refine the granular structure to raise the strength and toughness, but the rest of the casting, comprising the parts of the axle housings 22 other than the endtubes 26, the differential gear housing 21, and the brackets 23 and the likes, is all left in the mold 30, cooling as is so as to develop ductility.

Subsequently, the root part of each of the endtubes 26 of each axle housing 22 is subjected to high frequency quenching at a temperature in or near 970 ∼ 980°C range by means of a high frequency quenching machine 34 into hard martensitic structure. Thereafter, the rest of the casting is taken out of the mold 30, and the whole body is annealed at a temperature below the Aₗ transformation point.

As a result of this process, the root parts of the endtubes 26 are finished in a hard and tough tempered martensitic structure, while the rest are finished in a ductile pearlite structure.

In the practice described above, the order of the two heat treatments may be reversed, performing the whole body annealing first, then the high frequency quenching, where the annealing should be conducted at a temperature near 800°C, and the high frequency quenching be conducted at a temperature in or near 970 ∼ 980°C range. As a result of this process, the root parts of the endtubes 26 are left in hard martensitic structure, while the rest is in ductile pearlite structure.

In either case, endtubes 26 that will not be damaged by the stress acting on the axle, which concentrates at the root part thereof, are formed. Since the parts other than aforesaid endtubes 26 of the integrally cast rear axlecase 20 are in the pearlite structure of a low hardness of H_{B} = 150 or thereabout, on ther hand, good mechanical properties having an improved elongation value are realized, so that they will not fracture, even if got deformed, on contact with an object protruding from the road surface.

Here, the particulars of aforesaid high frequency quenching and annealing treatments should be decided upon in accordance with the kind of the nodular graphite cast iron to be used, the design strength to be attained, and other pertinent considerations.

Furthermore, since the use of nodular graphite cast iron in making the differential gear housing 21 and the axle housings 22 into an integral body ensures good castability, not only the wall thicknesses, hence the weight, of the rear axlecase 20 can be reduced substantially as a whole, but such assemblage works as welding or joining with bolts can be dispensed with, making it possible to manufacture the rear axlecase 20 at a low cost.

The foregoing statements have been verified by actually manufacturing a number of rear axlecases 20 according to this invention. A nodular graphite cast iron of a chemical composition shown in Table 1, which is equivalent to ASTM A536-84, was used.

**Table 1**

| Chemical Composition (percentage by weight) | | | | | | |
|---|---|---|---|---|---|---|
| C | Si | Mn | S | Cr | Cu | Mg |
| 3.42 | 2.50 | 0.28 | 0.005 | 0.033 | 0.21 | 0.04 |

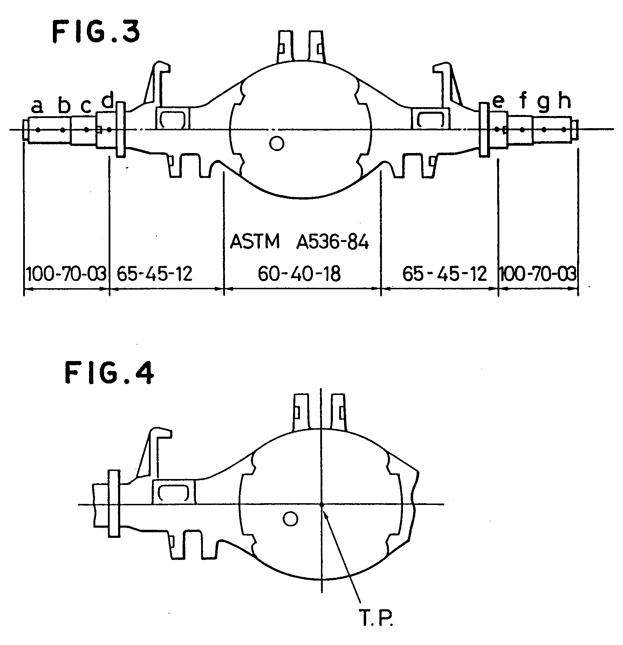

The design specifications were as given in Fig. 3, according to which the differential gear housing 21 should be 60-40-18 in ASTM A536-84, the parts of the axle housing 22 other than the endtubes 26 be 65-45-12, and the endtubes 26 be 100-70-03.

For a start, neither quenching treatment nor annealing treatment was performed on this rear axlecase 20. The surface hardnesses taken with a Brinell hardness tester at points a ∼ h shown in Fig. 3 are presented in Table 2.

**Table 2**

| Results of Hardness Mesurement (in H_{B}) | | | | | | | | |
|---|---|---|---|---|---|---|---|---|
| Product ID No. | Measuring Position | | | | | | | |
| | a | b | c | d | e | f | g | h |
| None | 285 | 269 | 241 | 241 | 241 | 241 | 255 | 285 |
| 5 | 255 | 255 | 248 | 241 | 241 | 241 | 269 | 262 |
| 8 | 302 | 293 | 262 | 269 | 277 | 255 | 255 | 285 |
| 10 | 302 | 302 | 302 | 269 | 269 | 277 | 302 | 302 |
| 11 | 269 | 269 | 269 | 277 | 277 | 255 | 285 | 285 |
| 12 | 285 | 285 | 255 | 269 | 277 | 255 | 285 | 285 |
| 13 | 269 | 262 | 285 | 285 | 285 | 269 | 293 | 285 |
| 16 | 302 | 302 | 293 | 277 | 269 | 269 | 285 | 302 |
| 17 | 285 | 285 | 269 | 255 | 277 | 269 | 269 | 302 |
| 18 | 293 | 302 | 269 | 277 | 248 | 248 | 285 | 285 |

It will be seen that for each product the hardnesses of the endtubes 26 of the axle housing 22 fall in a hardness range of H_{B} = 241 ∼ 311, which is the specification of ASTM A536-84, 100-70-03. Thus, it was demonstrated that in this case the design specifications were amply satisfied without resorting to quenching treatment.

Nextly, a 4 mmφ size tension test piece, taken from the portion indicated in Fig. 4 as T.P., gave in a tension test a tensile strength of 56 kgf/mm² and an elongation of 23 %, attesting to that ample ductility has been obtained in the part concerned.

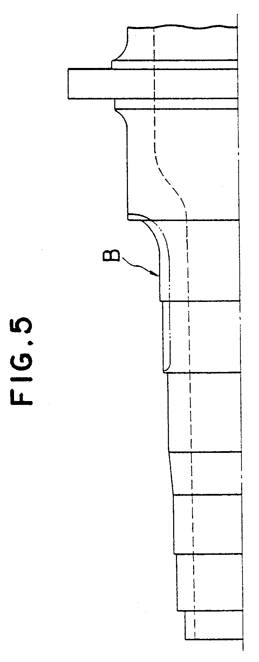

Furthermore, high frequency quenching was performed on the root parts of the endtubes 26 (indicated by B in Fig. 5) of the axle housing 22 for a set of specifications of the as-quenched hardness to be H_{RC} 50 or above and the quenching depth to be 2 mm or more. Quenching was conducted by heating the part B of an endtube 26 for 5.5 seconds at 970 ∼ 980°C by fully turning a half-circle induction coil, then cooling with water for 100 seconds. Subsequently, annealing was given at 200°C, which is below the Aₗ transformation point.

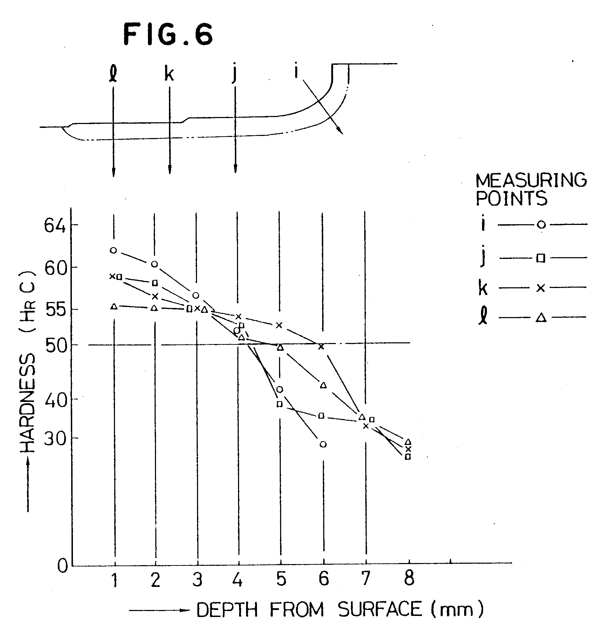

The results are depicted in Fig. 6 in terms of measurements taken with a Rockwell hardness tester (C scale) at points i ∼ ℓ. It will be appreciated that the hardness of H_{RC} 50 or above is kept well beyond a depth of 2 mm, indicating formation of martensitic structure therein.

## Claims

1. A method of manufacturing a rear axlecase (20) by forming casting mold so as to produce an integral casting comprising the differential gear housing (21) and the axle housings (22), each having an endtube part (26);
pouring thereinto nodular graphite cast iron (32); **characterized in that**
after completion of the casting, the endtube parts (26) are cooled naturally or forcibly by dividing and removing those parts (33) of the casting mold (30) which have served in the making of said endtube parts (26), and the other parts of integral casting are cooled by leaving them inside the casting mold (30).

2. The method of claim 1, **characterized in that** after the cooling of the endtube parts, a root part of each endtube part is subjected to the high frequency quenching.

3. The method of claim 2, **characterized in that** the high frequency quenching is performed at a temperature between 970°C and 980°C.

4. The method of claim 3, **characterized in that** after the high frequeny quenching, said other parts of the casting are taken out of the mold and the whole casting is subjected to annealing at a temperature below the Al transformation point.

5. The method of claim 1, **characterized in that** after said cooling of the endtube parts, said other parts of the casting are taken out of the mold and the whole casting is subjected to annealing.

6. The method of claim 5, **characterized in that** the annealing is conducted at a temperature near 800°C.

7. The method of claim 5 or 6, **characterized in that** after the annealing step, a root part of each endtube part (26) is subjected to the high frequency quenching.

8. The method of claim 7, **characterized in that** the high frequency quenching is performed at a temperature near 970°C and 980°C.

## Patentansprüche

1. Verfahren zur Herstellung eines Hinterachsgehäuses (20) durch Herstellung einer Gußform, um ein einstückiges Gußstücks herzustellen, das das Differentialgetriebegehäuses (21) und die Achsgehäuse (22) umfaßt, die jeweils ein Endrohrteil (26) aufweisen; Gießen von Kugelgraphitgußeisen (32) dort hinein, **dadurch gekennzeichnet, daß** nach Fertigstellung des Gußstücks die Endrohrteile (26) auf natürliche oder erzwungene Weise gekühlt werden, indem jene Teile (33) der Gußform (30), die zur Herstellung der Endrohrteile (26) gedient haben, geteilt und entfernt werden, und die anderen Teile des einstückigen Gußstücks gekühlt werden, indem sie innerhalb der Gußform (30) belassen werden.

2. Verfahren nach Anspruch 1, **dadurch gekennzeichnet, daß** nach dem Kühlen der Endrohrteile, ein Fußteil jedes Endrohrteils einem Hochfrequenzabschrecken unterzogen wird.

3. Verfahren nach Anspruch 2, **dadurch gekennzeichnet, daß** das Hochfrequenzabschrecken bei einer Temperatur zwischen 970°C und 980°C durchgeführt wird.

4. Verfahren nach Anspruch 3, **dadurch gekennzeichnet, daß** nach dem Hochfrequenzabschrecken die anderen Teile des Gußstücks aus der Form entnommen werden und das gesamte Gußstück einem Glühen bei einer Temperatur unterhalb des Al-Umwandlungspunkts unterzogen wird.

5. Verfahren nach Anspruch 1, **dadurch gekennzeichnet, daß** nach dem Kühlen der Endrohrteile, die anderen Teile des Gußstücks aus der Form entnommen werden und das gesamte Gußstück einem Glühen unterzogen wird.

6. Verfahren nach Anspruch 5, **dadurch gekennzeichnet, daß** das Glühen bei einer Temperatur in der Nähe von 800°C durchgeführt wird

7. Verfahren nach Anspruch 5 oder 6, **dadurch gekennzeichnet, daß** nach dem Glühschritt, ein Fußteil jedes Endrohrteils (26) dem Hochfrequenzabschrecken unterzogen wird.

8. Verfahren nach Anspruch 7, **dadurch gekennzeichnet, daß** das Hochfrequenzabschrecken bei einer Temperatur in der Nähe von 970°C und 980°C durchgeführt wird.

## Revendications

1. Procédé de fabrication d'un carter d'essieu arrière (20) par constitution d'un moule, afin de produire un moulage intégral comprenant le logement d'engrenage différentiel (21) et les logements d'essieu (22) comportant chacun une partie de tube d'extrémité (26); le versement dans celui-ci de fer de moulage au graphite nodulaire (32);
caractérisé en ce que
après achèvement du moulage, les parties de tube d'extrémité (26) sont refroidies naturellement ou de force, en divisant et en retirant les parties (33) du moule (30) qui ont servi dans la réalisation desdites parties de tube d'extrémité (26), et
les autres parties du moulage intégral sont refroidies en les laissant à l'intérieur du moule (30).

2. Procédé selon la revendication 1, caractérisé en ce que, après refroidissement des parties de tube d'extrémité, une partie de racine de chaque partie de tube d'extrémité fait l'objet d'une trempe à haute fréquence.

3. Procédé selon la revendication 2, caractérisé en ce que la trempe à haute fréquence est effectuée à une température comprise entre 970°C et 980°C.

4. Procédé selon la revendication 3, caractérisé en ce que, après la trempe à haute fréquence, lesdites autres parties du moulage sont extraites du moule, et l'ensemble du moulage fait l'objet d'un recuit à une température inférieure au point de transformation de l'Al.

5. Procédé selon la revendication 1, caractérisé en ce que, après ledit refroidissement des parties de tube d'extrémité, lesdites autres parties du moulage sont extraites du moule, et l'ensemble du moulage fait l'objet d'un recuit.

6. Procédé selon la revendication 5, caractérisé en ce que le recuit est effectué à une température voisine de 800°C.

7. Procédé selon la revendication 5 ou 6, caractérisé en ce que, après l'étape de recuit, une partie de racine de chaque partie de tube d'extrémité (26) fait l'objet de la trempe à haute fréquence.

8. Procédé selon la revendication 7, caractérisé en ce que la trempe à haute fréquence est effectuée à une température voisine de 970°C et 980°C.
